# EUROPEAN PATENT SPECIFICATION

(11) **EP 3 709 754 B1**
(45) Date of publication and mention of the grant of the patent: **12.07.2023**
(21) Application number: 18891193.7
(22) Date of filing: 08.06.2018
(51) Int. Cl.: H04W 74/00, H04W 74/08, H04W 88/08, H04W 92/10

(54) **RANDOM ACCESS METHOD AND DEVICE**
DIREKTZUGRIFFSVERFAHREN UND -VORRICHTUNG
PROCÉDÉ ET DISPOSITIF D'ACCÈS ALÉATOIRE

(30) Priority: 19.12.2017 WO PCT/CN2017/117104
(43) Date of publication of application: 16.09.2020
(73) Proprietor: Huawei Technologies Co., Ltd., Longgang Shenzhen, Guangdong 518129 (CN)
(72) Inventor: WU, Guoliang, Shenzhen, Guangdong 518129 (CN); FAN, Hua, Shenzhen, Guangdong 518129 (CN); WANG, Xiaopeng, Shenzhen, Guangdong 518129 (CN)
(74) Representative: Gill Jennings & Every LLP
(86) International application number: PCT/CN2018/090396
(87) International publication number: WO 2019/119738

(56) References cited:
- EP-A1- 3 070 859
- CN-A- 101 828 359
- CN-A- 106 233 784
- US-A1- 2014 212 129
- US-A1- 2016 135 227
- US-A1- 2016 165 522

## Description

### TECHNICAL FIELD

This application relates to the mobile communications field, and in particular, to a random access method and apparatus.

### BACKGROUND

Networking of a plurality of remote radio units (remote radio unit, RRU) in one cell refers to a technology in which physical cells covered by a plurality of RRUs that work in a same frequency band are combined into one cell in a geographic area. In the multi-RRU cell networking, a media access control layer may send a pre-allocated resource to each processing unit. When receiving a random access request sent by user equipment (user equipment, UE), the processing unit generates, by using the pre-allocated resource, a random access response (random access response, RAR) corresponding to the user equipment, and sends the RAR to the user equipment.

When the processing unit generates, by using the pre-allocated resource, the RAR corresponding to the user equipment, even if the user equipment is located in an overlapping coverage of a plurality of RRUs, only one processing unit generates and sends a corresponding RAR for the random access request sent by the user equipment.

If the user equipment is located in a cell in multi-RRU cell networking, the user equipment receives reference signals sent by a plurality of processing units, but receives only an RAR sent by one processing unit. Consequently, a case in which a channel on which the user equipment receives the RAR does not match a channel on which the user equipment receives the reference signal may occur, resulting in deterioration of RAR demodulation performance and an increase of a bit error rate.

EP3070859 relates to method for obtaining uplink synchronization and configuring uplink connection. US2016135227 relates to method for performing random access by terminal, and terminal. US2014212129 relates to remote radio header selection.

### SUMMARY

This application provides a random access method and apparatus, to resolve a problem in an existing random access method that demodulation performance of an RAR deteriorates and a bit error rate increases because a channel on which user equipment receives the RAR does not match a channel on which the user equipment receives a reference signal.

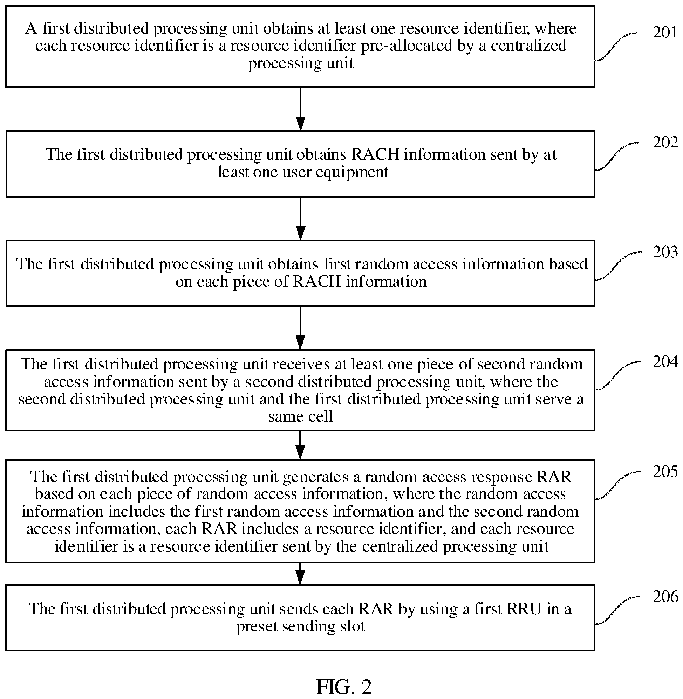

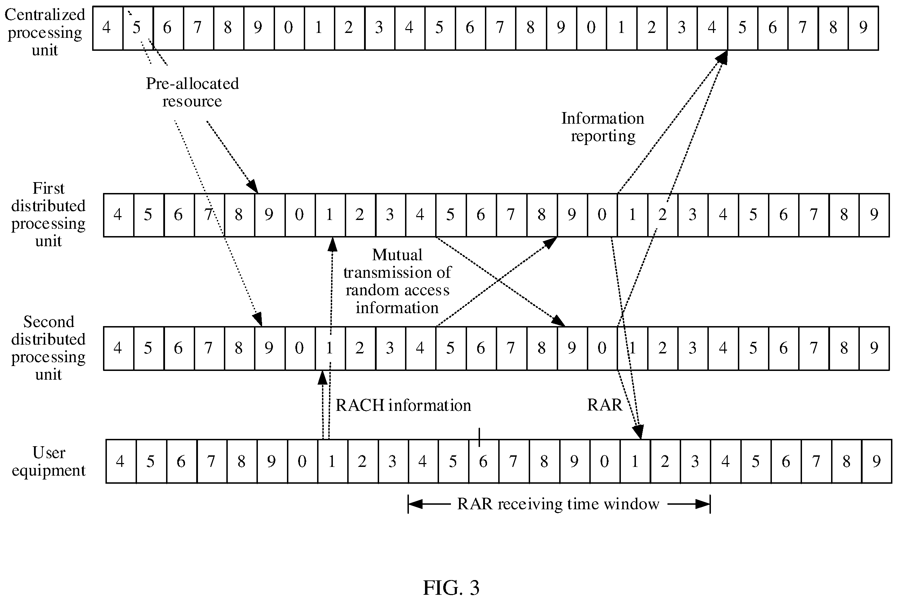

The invention has been defined in the independent claims. Further specific technical features have been defined in the dependent claims. The embodiment of FIGs. 2 and 3 falls under the scope of the appended claims. The other embodiments do not fall under the scope of the claims and are to be regarded as mere examples useful to better understand the invention.

According to the invention, each RRU in the cell can obtain the random access information that corresponds to the RACH information sent by all user equipment, so that the RARs of all the user equipment can be generated based on the random access information, and then the RRUs synchronously send respective RARs, so that each user equipment may receive, in a same slot, the RARs sent by all the RRUs, and a channel on which the RAR is received matches a channel on which a reference signal is received, thereby ensuring that the user equipment accurately demodulates the RAR.

### BRIEF DESCRIPTION OF DRAWINGS

FIG. 1 is a schematic structural diagram of a wireless communications system according to this application;
FIG. 2 is a flowchart of an implementation of a random access method according to this application;
FIG. 3 is a sequence diagram of a random access method according to this application;
FIG. 4 is a flowchart of another implementation of a random access method according to this application;
FIG. 5 is another sequence diagram of a random access method according to this application;
FIG. 6 is a flowchart of another implementation of a random access method according to this application;
FIG. 7 is a schematic structural diagram of an implementation of a random access apparatus according to this application;
FIG. 8 is a schematic structural diagram of another implementation of a random access apparatus according to this application;
FIG. 9 is a schematic structural diagram of another implementation of a random access apparatus according to this application;
FIG. 10 is a schematic structural diagram of another implementation of a random access apparatus according to this application; and
FIG. 11 is a schematic structural diagram of another implementation of a random access apparatus according to this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

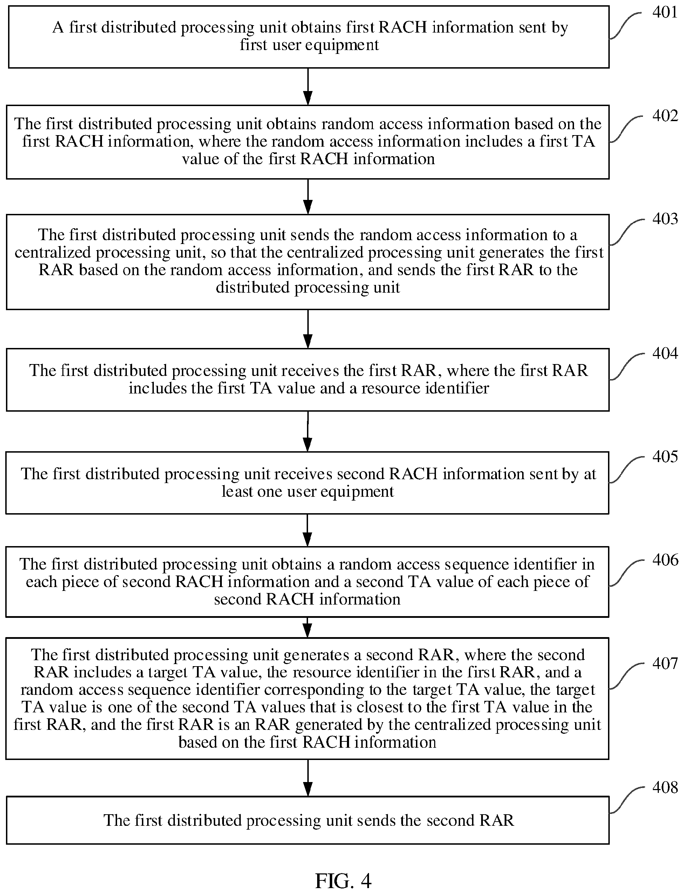

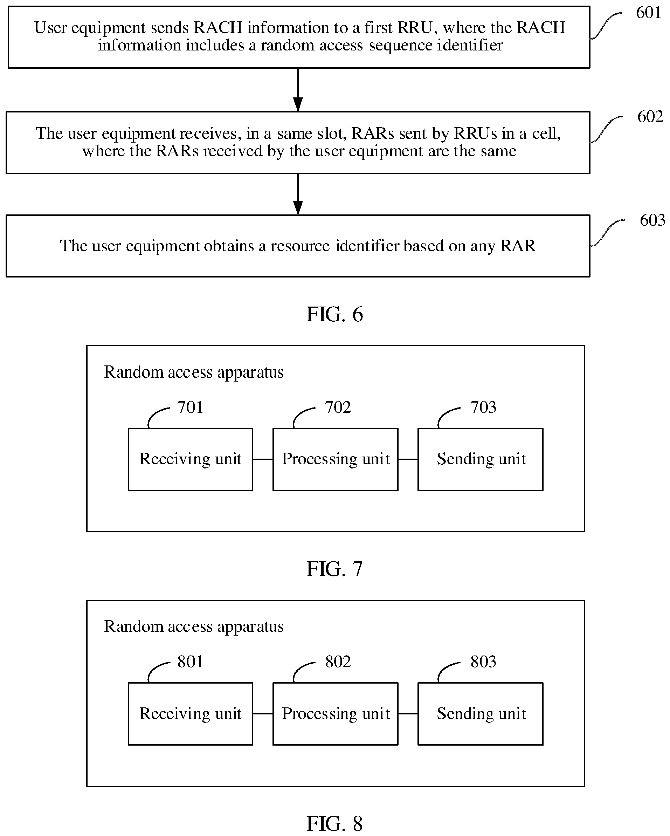

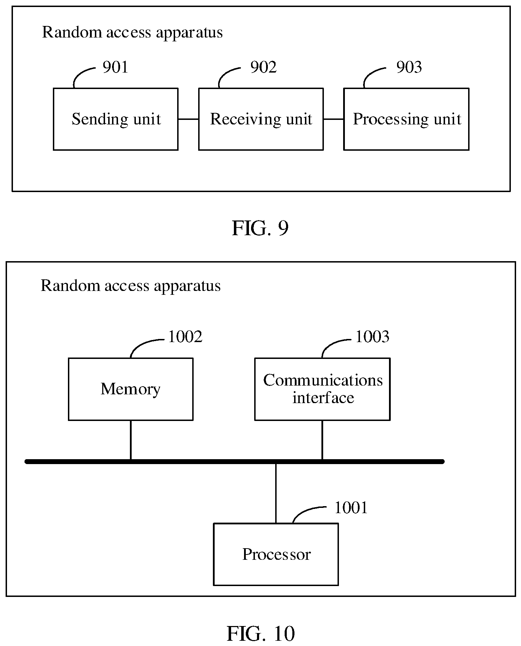

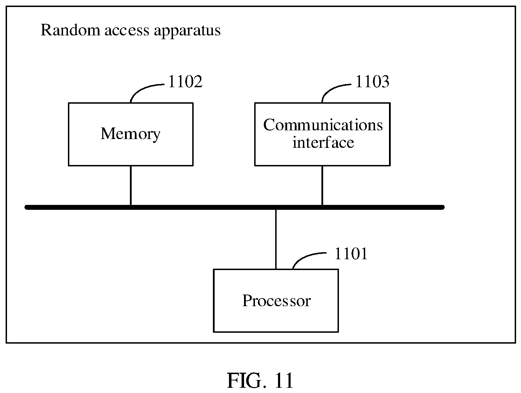

In particular, the methods described in conjunction with figures 4 to 6 does not fall within the scope of the claimed invention. Any references to these methods in the description provided in conjunction with figure 7, 8 and 10 are to be considered accordingly. Further, the user equipment described in conjunction with figures 9 and 11 does not fall within the scope of the claimed invention.

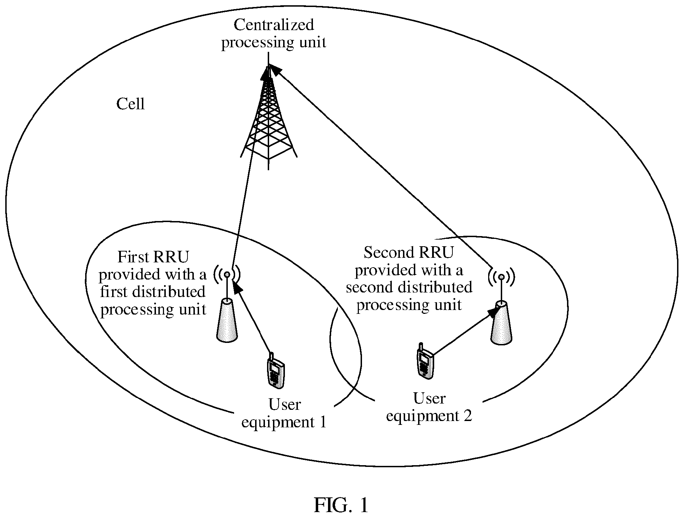

The random access method and apparatus provided in this application may be applied to a scenario in which user equipment accesses a wireless network, for example, may be applied to a wireless communications system shown in FIG. 1. A multi-RRU (remote radio unit, RRU) cell may include a centralized processing unit and a distributed processing unit.

The centralized processing unit may be disposed in a baseband unit (baseband unit, BBU), or may be the BBU, or may be independent of the BBU. The distributed processing unit may be disposed in the RRU, or may be the RRU, or may be independent of the RRU. When the distributed processing unit is independent of the RRU, the distributed processing unit may also be in a one-to-one correspondence with the RRU.

In addition to implementing a function of the centralized processing unit, the BBU may be further configured to deploy a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer that are used for higher-layer data transmission and scheduling, baseband signal processing, and the like. The RRU may be further configured to perform uplink and downlink frequency conversion on data, power amplification, filtering, intermediate frequency and radio frequency signal conversion, and the like.

The centralized processing unit may be configured to perform centralized resource management and pre-allocation. A millisecond transmission delay may exist between the centralized processing unit and the distributed processing unit. The distributed processing unit responds, in a timely manner, to reception of information by the RRU. The centralized processing unit may further be configured to implement a function that needs to be implemented by the foregoing BBU.

When the distributed processing unit is independent of the RRU, data transmission between the distributed processing unit and the RRU may be performed by using a common public radio interface (common public radio interface, CPRI), and a transmission delay is in the microsecond range; and data transmission between the centralized processing unit and the distributed processing unit may be performed by using an X2 interface based on an IP protocol, and a transmission delay can be in the millisecond range.

In the implementations of this application, each logical cell may include a centralized processing unit and a plurality of physical cells, and one distributed processing unit and a corresponding RRU may be deployed in each physical cell. The RRU is configured to perform uplink and downlink frequency conversion on data, power amplification, filtering, intermediate frequency and radio frequency signal conversion, and the like. In multi-RRU cell networking, a plurality of physical cells that cover different areas form a logical cell. The centralized processing unit is used for centralized management, and a plurality of distributed processing units are used for distributed processing, thereby avoiding a bidirectional transmission delay caused by centralized processing and distribution.

In the implementations of this application, the distributed processing unit may directly communicate with the user equipment. When the distributed processing unit is independent of the RRU, unless otherwise specified, communication between the user equipment and the distributed processing unit may also be implemented by forwarding by the RRU or another network element having a capability of communicating with the user equipment. For example, the distributed processing unit sends information to a corresponding RRU or another network element, and then the RRU or the another network element forwards the information to the user equipment.

Similarly, the centralized processing unit may also directly communicate with the distributed processing unit. When the centralized processing unit is independent of the BBU, the centralized processing unit may also communicate with the distributed processing unit by forwarding by the BBU or another network element. Details are not described herein again.

As shown in FIG. 1, before performing network communication, user equipment in a cell may send random access channel (random access channel, RACH) information to an RRU, to request to access a network. When a plurality of user equipments send the RACH information in a same slot, each RRU in the cell is responsible for receiving the RACH information sent by user equipment within a coverage of the RRU. The RACH information may include a random access sequence identifier (RA-preamble identifier). Each RRU demodulates the received RACH information to obtain random access information, and the random access information may include a random access sequence identifier in the RACH information, a time advance (time advance, TA) value corresponding to the RACH information, and a signal strength value of the RACH information. Each RRU sends demodulated information to the corresponding distributed processing unit. The distributed processing unit may generate an RAR by using the random access sequence identifier, the TA value, and a communication resource identifier (hereinafter briefly referred to as a "resource identifier") pre-allocated by the centralized processing unit, and send the RAR to the user equipment, so that the user equipment performs network communication by using a resource corresponding to the resource identifier in the RAR.

A technology described in this application may be applicable to a long term evolution (long term evolution, LTE) system, or another wireless communications system that uses various radio access technologies, for example, a system that uses an access technology such as code division multiple access, frequency division multiple access, time division multiple access, orthogonal frequency division multiple access, or single carrier frequency division multiple access. In addition, the technologies may be alternatively applied to a subsequent evolved system that uses an LTE system, for example, a fifth-generation 5G system.

The user equipment in this application may be any device that can access a wireless network, for example, a mobile phone (or referred to as a "cellular" phone), and a computer that has a mobile terminal. For example, the user equipment may be a portable, pocket-size, handheld, computer built-in or in-vehicle mobile apparatus, which exchanges voice and/or data with the radio access network. For example, the user equipment may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The user equipment may also be referred to as a terminal (terminal), a subscriber unit (subscriber unit, SU), a subscriber station (subscriber station, SS), a mobile station (mobile station, MS), a remote station (remote station, RS), an access point (access point, AP), a remote terminal (remote terminal, RT), an access terminal (access terminal, AT), or a user agent (user agent, UA).

In this application, the first distributed processing unit may be any distributed processing unit in the cell, the second distributed processing unit may be any one or more distributed processing units in the cell except the first distributed processing unit, and the first distributed processing unit and the second distributed processing unit may be located at different physical sites but belong to a same logical cell.

In this application, the first RRU may be any RRU in the cell, the second RRU may include another RRU in the cell different from the first RRU, and the first RRU and the second RRU may be managed by a same eNB.

For ease of description and differentiation, in the implementations of this application, the random access information obtained by the first distributed processing unit is collectively referred to as first random access information, and the random access information obtained by the second distributed processing unit is referred to as second random access information.

This application is described below by using an example in which the distributed processing unit is independent of the RRU.

FIG. 2 is a flowchart of an implementation of a random access method according to this application. The method may include the following steps.

Step 201: A first distributed processing unit obtains at least one resource identifier, where each resource identifier is a resource identifier pre-allocated by a centralized processing unit.

The first distributed processing unit may obtain the at least one resource identifier from the centralized processing unit. When the centralized processing unit is a BBU or can implement a related function of the BBU, the resources may be allocated and sent by a MAC layer.

In a sequence diagram shown in FIG. 3, in any random access period before a random access period in which the user equipment sends RACH information, the centralized processing unit sends the pre-allocated resource identifier to the distributed processing unit. For example, when the centralized processing unit is a BBU, an RRC layer in the BBU may send the pre-allocated resource identifier to the MAC layer, and then the MAC layer in the BBU sends the pre-allocated resource identifier to each RRU.

Therefore, when receiving the RACH information, each distributed processing unit generates an RAR by using the pre-allocated resource identifier. The user equipment may obtain, in a manner in which the resource identifiers are pre-allocated to each distributed processing unit, the RAR in a random access period in which the RACH information is sent for the first time.

Step 202: The first distributed processing unit obtains RACH information sent by at least one user equipment.

When the first distributed processing unit is independent of a first RRU, the first distributed processing unit may obtain the RACH information sent by the at least one user equipment.

In the sequence diagram shown in FIG. 3, after each distributed processing unit receives the pre-allocated resource identifier, the at least one user equipment sends the RACH information to each RRU. The RACH information sent by the user equipment is received by an RRU that covers the user equipment. The RACH information may be RACH information sent by each user equipment when the user equipment requests to randomly access a network for the first time. After receiving the RACH information, the first RRU performs corresponding processing such as demodulation, and sends the processed RACH information to the corresponding first distributed processing unit, so that the first distributed processing unit obtains the RACH information sent by the at least one user equipment.

Step 203: The first distributed processing unit obtains first random access information based on each piece of RACH information.

When demodulating the RACH information received by the first RRU, the first RRU may obtain the first random access information, that is, a random access sequence identifier in the RACH information, a TA value of the RACH information, and a signal strength value of the RACH information. The TA value may be a difference between a moment at which the user equipment sends the RACH information and a moment at which the first distributed processing unit receives the RACH information, and may represent a distance between the user equipment and the first distributed processing unit. When the first distributed processing unit is independent of the first RRU, the first RRU may send the first random access information to the first distributed processing unit, so that the first distributed processing unit obtains the information.

Step 204: The first distributed processing unit receives at least one piece of second random access information sent by a second distributed processing unit, where the second distributed processing unit and the first distributed processing unit serve a same cell.

When the at least one user equipment simultaneously sends the RACH information to a plurality of RRUs, each RRU in the cell may separately receive RACH information sent by user equipment within a coverage area of the RRU. Therefore, if the first distributed processing unit corresponds to a first RRU, the second distributed processing unit corresponds to a second RRU, and a coverage of the first RRU overlaps a coverage of the second RRU, the first distributed processing unit and the second distributed processing unit may receive a same piece of RACH information at the same time.

After receiving the RACH information, the second distributed processing unit may demodulate the RACH information and generate second random access information, and then send the second random access information to the first distributed processing unit. A process in which the second distributed processing unit obtains the second random access information based on the RACH information received by the second distributed processing unit is similar to a process in which the first distributed processing unit obtains the first random access information based on the RACH information received by the first distributed processing unit. Details are not described herein again.

The RACH information sent by each user equipment in the cell is received by the RRU responsible for the user equipment, and random access information corresponding to each piece of RACH information is generated by a distributed processing unit corresponding to the RRU. Therefore, a sum of the random access information in each distributed processing unit is random access information that corresponds to the RACH information sent by all user equipments. After receiving the second random access information sent by the second distributed processing unit, the first distributed processing unit may obtain the random access information that corresponds to the RACH information sent by all user equipments.

Step 205: The first distributed processing unit generates a random access response RAR based on each piece of random access information, where the random access information includes the first random access information and the second random access information, each RAR includes a resource identifier, and each resource identifier is a resource identifier sent by the centralized processing unit.

The RAR generated by each distributed processing unit includes the resource identifier a and may further include random access sequence identifier in the random access information, a TA value, and the like. When generating the RAR based on each piece of random access information, each distributed processing unit may randomly select one resource identifier from the pre-allocated resource identifiers to generate the RAR, but it needs to be ensured that each distributed processing unit allocates a same resource identifier to same user equipment.

The RAR includes the TA value, so that the user equipment may adjust, by using the TA value, a time of sending information to the RRU, and a moment at which the RRU receives the message is the same as a moment specified by the RRU.

When generating RARs, the distributed processing units generate the RARs by using a same generation algorithm, to ensure that the distributed processing units generate a same RAR for random access information corresponding to same user equipment, so that the user equipment accurately reads the RARs.

During specific implementation, distances between each distributed processing unit and a centralized processing unit in a cell may be different.

For example, as shown in FIG. 3, a distance between the first distributed processing unit and the centralized processing unit is relatively short, so that the first distributed processing unit may be referred to as a near-end distributed processing unit; and a distance between the second distributed processing unit and the centralized processing unit is relatively long, so that the second distributed processing unit may be referred to as a far-end distributed processing unit. If the centralized processing unit completely generates the RAR of each user equipment based on each piece of random access information, and then sends each RAR to the corresponding distributed processing unit and the RRU, and because some distributed processing units are far away from the centralized processing unit, when a transmission delay is relatively large, reception of the RAR by the user equipment times out, and access cannot be completed. However, in this application, each distributed processing unit may generate, by using the resource identifier pre-allocated by the centralized processing unit, the RAR corresponding to each user equipment, thereby avoiding a bidirectional transmission delay generated when the access information is reported to the centralized processing unit for generating the RAR and then the RAR is delivered to the distributed processing unit, to greatly reduce a requirement on a network transmission delay. Because each distributed processing unit obtains the complete access information of the cell through mutual transmission, a same processing mechanism is used to ensure that each distributed processing unit can obtain a same RAR result through processing, thereby avoiding a problem that the user equipment receives different RARs sent by each RRU or an RRU used to send an RAR is different from an RRU used to send a cell-specific reference signal.

The random access information in the first distributed processing unit includes the first random access information demodulated by the first distributed processing unit and the second random access information sent by the second distributed processing unit. Because one user equipment may be located in a coverage area in which two or more RRUs overlap, and the RACH information sent by same user equipment may be received by a plurality of RRUs, the random access information in the first distributed processing unit includes random access information with a repeated random access sequence identifier. In this case, the distributed processing units perform combination processing, that is, select all RRUs having a maximum access signal strength value or a minimum timing advance TA for a same user as target RRUs, to generate a corresponding RAR by using a TA value corresponding to the RRU. In this way, a relatively good RAR can be obtained, and an RRU having relatively good signal transmission quality can provide a service for the user equipment.

Because the first distributed processing unit may obtain the random access information that corresponds to the RACH information sent by all user equipments in the cell, the first distributed processing unit may generate RARs of all the user equipments. Similarly, each distributed processing unit in the cell may generate the RARs of all the user equipments, and the RAR results are completely the same.

Step 206: The first distributed processing unit sends each RAR in a preset sending slot.

When the first distributed processing unit is independent of the first RRU, the first distributed processing unit may send each RAR in the preset synchronous sending slot, where the synchronous sending slot is a slot in which the RARs are synchronously sent by the first distributed processing unit and the second distributed processing unit, so that each RRU sends the RARs of all the user equipments in a same slot.

In this application, all distributed processing units in the cell synchronously send a same RAR, so that a channel on which an RAR is received by each user equipment matches a channel on which a reference signal is received by the user equipment, thereby ensuring that the user equipment accurately demodulates the RAR.

To enable the second distributed processing unit to synchronously send the same RAR as the first distributed processing unit, after step 203, the method may further include: sending, by the first distributed processing unit, the first random access information to the second distributed processing unit, so that the second distributed processing unit generates the RAR based on each piece of random access information, and sends each RAR in a preset sending slot.

It should be noted that a slot in which the first distributed processing unit sends the first random access information to the second distributed processing unit may be the same as or different from a slot in which the second distributed processing unit sends the second random access information to the first distributed processing unit.

In addition, to enable each distributed processing unit to generate a same RAR for same user equipment, resource identifiers sent by the centralized processing unit to each distributed processing unit may be the same, that is, each resource identifier sent by the centralized processing unit to the first distributed processing unit is the same as each resource identifier sent by the centralized processing unit to the second distributed processing unit.

In this application, after demodulating the RACH information received by each distributed processing unit to obtain the random access information corresponding to each piece of RACH information, each distributed processing unit may send the random access information to the centralized processing unit, and the centralized processing unit adaptively adjusts a next resource pre-allocation scheme based on the user equipment corresponding to the random access information and the pre-allocated resource identifier.

In the foregoing implementation, before sending the RACH information to the user equipment, the centralized processing unit sends the pre-allocated resource identifier to each distributed processing unit, so that each distributed processing unit generates the RAR. In the following provided implementation, the centralized processing unit may apply to the centralized processing unit for a resource identifier based on the RACH information sent by the user equipment for the first time, and then send the obtained resource identifier to each distributed processing unit, so that each distributed processing unit generates an RAR after receiving the RACH information sent again by the user equipment. For specific steps, refer to an implementation shown in FIG. 4.

FIG. 4 is a flowchart of another implementation of a random access method according to this application. The method may include the following steps.

Step 401: A first distributed processing unit obtains first RACH information sent by first user equipment.

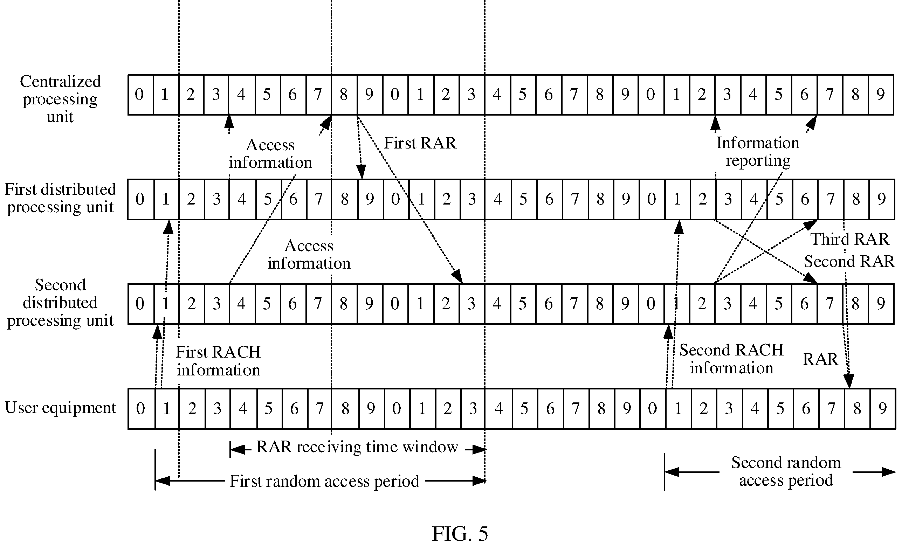

In a sequence diagram shown in FIG. 5, when needing to access a network, the first user equipment may send RACH information within a first random access period, that is, send the first RACH information. When the distributed processing unit is independent of the RRU, the first RACH information is received by an RRU that covers the first user equipment, and the first distributed processing unit obtains the first RACH information from the corresponding first RRU. The first user equipment may be any user equipment in a cell.

Step 402: The first distributed processing unit obtains random access information based on the first RACH information, where the random access information includes a first TA value of the first RACH information.

The random access information may further include a random access sequence identifier in the RACH information.

Step 403: The first distributed processing unit sends the random access information to a centralized processing unit, so that the centralized processing unit generates the first RAR based on the random access information, and sends the first RAR to the distributed processing unit.

For example, when the centralized processing unit is a BBU, after receiving the random access information, a MAC layer in the BBU may send the random access information to an RRC layer, and the RRC layer generates a first RAR based on the random information. The first RAR may include a random access sequence identifier in the first RACH information, a first TA value, and a resource identifier. The RRC layer sends the first RAR to the MAC layer, and then the MAC layer sends the first RAR to the first distributed processing unit.

Because the first user equipment may be located in a coverage area in which two or more RRUs overlap, and the first RACH information sent by the first user equipment may be received by a plurality of RRUs, the random access information in the centralized processing unit may include random access information with a repeated random access sequence identifier. In this case, if each piece of random access information sent by the centralized processing unit generates the first RAR, RARs with a same random access sequence identifier may appear in the first RARs. Consequently, a waste of resources is caused. To avoid such a case, random access sequence identifiers in the generated first RARs need to be different. For a specific implementation, refer to the foregoing implementation.

When generating the first RAR, the centralized processing unit may preset that a sending slot of the first RRA is in a second random access period, where the second random access period may be a random access period subsequent to the first random access period.

The first RAR generated by the centralized processing unit is in a one-to-one correspondence with the first user equipment that requests random access in the first random access period. Therefore, resources can be allocated based on a target, so that random access requests of all user equipments can all be met, and resource redundancy and waste caused by blind resource allocation are avoided.

Step 404: The first distributed processing unit receives the first RAR, where the first RAR includes the first TA value and the resource identifier.

Because the centralized processing unit presets that the sending slot of the first RRA is in the second random access period, the first distributed processing unit does not immediately send the first RAR to the user equipment when receiving the first RAR, but buffers the first RAR.

Step 405: The first distributed processing unit receives second RACH information sent by at least one user equipment.

In the sequence diagram shown in FIG. 5, if the first user equipment does not receive, in an RAR receiving time window of the first random access period, the RAR corresponding to the first RACH information, that is, the first RAR, the first user equipment may send the RACH information again in the second random access period, that is, send the second RACH information. The first RACH information and the second RACH information that are sent by the first user equipment may have different random access sequence identifiers. The second RACH information also includes RACH information sent by another user equipment again or RACH information sent for the first time.

Step 406: The first distributed processing unit obtains a random access sequence identifier in each piece of second RACH information and a second TA value of each piece of second RACH information.

The first distributed processing unit demodulates each piece of received second RACH information. When demodulating the second RACH information, the first distributed processing unit may further obtain a signal strength value of the second RACH information in addition to obtaining the random access sequence identifier in the second RACH information and the TA value of the second RACH information.

Step 407: The first distributed processing unit generates a second RAR, where the second RAR includes a target TA value, the resource identifier in the first RAR, and a random access sequence identifier corresponding to the target TA value, the target TA value is one of the second TA values that is closest to the first TA value in the first RAR, and the first RAR is an RAR generated by the centralized processing unit based on the first RACH information.

When the first TA value in the first RAR corresponding to the first user equipment is compared with each second TA, if the second TA includes the second TA value that corresponds to the second RACH information sent by the first user equipment, it may be learned that the second TA value that corresponds to the second RACH information sent by the first user equipment is closest to the first TA value, so that the second TA value corresponding to the first user equipment is determined as the target TA. Therefore, the random access sequence identifier corresponding to the target TA can be found, so that the second RAR corresponding to the first user equipment is generated by using the target TA value, the resource identifier in the first RAR, and the random access sequence identifier corresponding to the target TA value.

When the first user equipment sends the RACH information again, that is, sends the second RACH information, another user equipment sends the RACH information for the first time. Therefore, the RRU can generate, by comparing the first TA value with the second TA value, the second RAR corresponding to the first user equipment that sends the second RACH information, to ensure that a resource is preferentially allocated to the first user equipment that sends the RACH information again, the user equipment that sends the RACH information for the first time is prevented from occupying a resource of the first user equipment that sends the RACH information again, to ensure that each user equipment can successfully receive a corresponding RAR.

Step 408: The first distributed processing unit sends the second RAR.

The first distributed processing unit may send the second RAR in a sending slot corresponding to the second RAR, where the sending slot corresponding to the second RAR and a slot in which each user equipment sends the second RACH information may be within a same random access period, that is, the second random access period. The sending slot corresponding to the second RAR is the sending slot that is of the first RRA and that is preset when the centralized processing unit generates the first RAR. When the second RAR is generated by using the first RAR, the preset sending slot in the first RAR is reserved.

In the second random access period, the first distributed processing unit regenerates the second RAR for the user equipment based on the second RACH information sent by the user equipment and by using the pre-allocated resource identifier in the first RAR. Therefore, in the second random access period, the RRU may quickly generate and send the second RAR, thereby avoiding a problem of an information transmission delay between the centralized processing unit and each RRU.

To enable the user equipment within the coverage of the second distributed processing unit to receive the RAR sent by each RRU in the cell, after step 407, the method may further include: receiving, by the first distributed processing unit, a third RAR sent by the second distributed processing unit, where the third RAR is an RAR generated by the second distributed processing unit based on third RACH information received by the second distributed processing unit, a slot in which the second distributed processing unit receives the third RACH information and a slot in which the first distributed processing unit receives the second RACH information are within a same random access period, and the first distributed processing unit and the second distributed processing unit serve a same cell; and then sending the third RAR in a sending slot corresponding to the third RAR, where the sending slot corresponding to the third RAR and the slot in which the second distributed processing unit receives the third RACH information are within a same random access period.

After the first distributed processing unit receives the third RAR sent by the second distributed processing unit, the RARs in the first distributed processing unit are RARs of all user equipments. Similarly, each RRU can obtain the RARs of all the user equipments. When each RRU synchronously sends the second RAR, the user equipment corresponding to the second RAR can receive the second RAR on a channel between the user equipment and each RRU, and a channel on which the second RAR is received can match a channel on which reference information is received, thereby ensuring that the user equipment corresponding to the second RAR accurately demodulates the second RAR. Similarly, it may also be ensured that user equipment corresponding to the third RAR accurately demodulates the third RAR.

A method for determining the sending slot corresponding to the third RAR may be similar to a method for determining the sending slot corresponding to the second RAR, and the sending slot of the second RAR may be different from the sending slot of the third RAR, thereby avoiding interference between RARs generated by the RRUs, and ensuring that each user equipment can accurately receive the RAR.

In this application, the RRA in each RRU includes an RRA generated by the RRU and an RRA sent by another RRU. Therefore, each RRU can obtain the RARs of all the user equipments. A same sending slot may be preset for RARs simultaneously generated by a same RRU. Therefore, each RRU may send, to corresponding user equipment in different slots, the RARs generated by the RRUs. The user equipment can receive the RARs on a channel between the user equipment and each RRU, and the channel on which the RAR is received can match a channel on which reference information is received, thereby ensuring that the user equipment accurately demodulates the RAR.

To enable the user equipment within the coverage of the first distributed processing unit to receive the RAR sent by each RRU in the cell, after step 407, the method may further include: sending, by the first distributed processing unit, the second RAR to a second distributed processing unit, so that the second distributed processing unit sends the second RAR, where the first distributed processing unit and the second distributed processing unit serve a same cell.

Because each RRU in the cell can obtain the second RAR, and the second RAR may correspond to a specific sending slot, each RRU in the cell can simultaneously send the second RAR to the user equipment, the user equipment corresponding to the second RAR can receive the second RAR on a channel between the user equipment and each RRU, and the channel on which the second RAR is received can match a channel on which reference information is received, thereby ensuring that the user equipment accurately demodulates the second RAR.

After step 406, the first distributed processing unit may send related information of a second access request to the centralized processing unit, that is, each random access sequence identifier and each second TA value.

After receiving the related information of the second access request, the centralized processing unit may accurately derive, based on the first RAR and the related information of the second access request, the RAR actually sent by each RRU to the user equipment. Therefore, the user equipment that does not receive the RAR feedback and the first RAR that is not used may be determined, thereby providing a basis for next resource pre-allocation.

After each RRU sends the RAR to the user equipment, the user equipment may perform the following steps.

FIG. 6 is a flowchart of another implementation of a random access method according to this application. The method may include the following steps.

Step 601: User equipment sends RACH information to a first RRU, where the RACH information includes a random access sequence identifier.

When the user equipment does not receive the RAR within a preset RAR receiving time window, the user equipment may resend the RACH information, and a random access sequence identifier in the RACH information may be different from a random access sequence identifier in RACH information sent last time.

Step 602: The user equipment receives, in a same slot, RARs sent by RRUs in a cell, where the RARs received by the user equipment are the same.

The user equipment can receive, based on the random access sequence identifier in the RACH information sent by the user equipment, the RAR allocated by each RRU to the user equipment.

Step 603: The user equipment obtains a resource identifier based on any RAR.

The user equipment may demodulate the RAR by using any reference signal received by the user equipment.

The user equipment can receive the RAR on a channel between the user equipment and each RRU, and the channel on which the RAR is received can match a channel on which reference information is received, thereby ensuring that the user equipment accurately demodulates the RAR.

FIG. 7 is a schematic structural diagram of an implementation of a random access apparatus according to this application. The implementation may be disposed on an RRU, or may be an RRU. The apparatus is configured to perform the random access method shown in FIG. 2. As shown in FIG. 7, the apparatus may include: a receiving unit 701, a processing unit 702, and a sending unit 703.

The receiving unit 701 is configured to obtain at least one resource identifier, where each resource identifier is a resource identifier sent by a centralized processing unit.

The receiving unit 701 is further configured to receive random access channel RACH information sent by at least one user equipment.

The processing unit 702 is configured to obtain first random access information based on each piece of RACH information.

The receiving unit 701 is further configured to receive at least one piece of second random access information sent by a second distributed processing unit, where the second distributed processing unit and the random access apparatus serve a same cell.

The second random access information is information obtained by the second distributed processing unit based on RACH information received by the second distributed processing unit.

The processing unit 702 is further configured to generate an RAR based on each piece of random access information, where the random access information includes the first random access information and the second random access information, each RAR includes the resource identifier, and each resource identifier is a resource identifier sent by the media access control centralized processing unit.

The sending unit 703 is configured to send each RAR in a preset sending slot.

Optionally, the sending unit 703 is further configured to send the first random access information to the second distributed processing unit, so that the second distributed processing unit generates the RAR based on each piece of random access information, and sends each RAR in the preset sending slot.

Optionally, the sending unit 703 may be further configured to send each RAR in the preset synchronous sending slot, where the synchronous sending slot is a slot in which the RARs are synchronously sent by the random access apparatus and the second distributed processing unit.

Optionally, random access sequence identifiers in the RARs are different.

To implement that the random access sequence identifiers in the RARs are different, the processing unit 702 may be further configured to: when the random access information includes third random access information having a same random access sequence identifier, generate a corresponding RAR based on random access information that is in the third random access information and that has a maximum signal strength value or a minimum timing advance TA.

Optionally, each resource identifier sent by the centralized processing unit to the random access apparatus is the same as a resource identifier sent by the centralized processing unit to the second distributed processing unit.

FIG. 8 is a schematic structural diagram of another implementation of a random access apparatus according to this application. The implementation may be disposed on an RRU, or may be an RRU. The apparatus is configured to perform the random access method shown in FIG. 4. As shown in FIG. 8, the apparatus may include: a receiving unit 801, a processing unit 802, and a sending unit 803.

The receiving unit 801 is configured to receive the first RACH information sent by first user equipment.

The processing unit 802 is configured to obtain random access information based on the first RACH information, where the random access information includes a first TA value of the first RACH information.

The sending unit 803 is configured to send the random access information to a centralized processing unit, so that the centralized processing unit generates the first RAR based on the random access information, and sends the first RAR to a distributed processing unit.

The receiving unit 801 is further configured to receive the first RAR, where the first RAR includes the first TA value and the resource identifier.

The receiving unit 801 is further configured to receive second RACH information sent by at least one user equipment.

The processing unit 802 is further configured to obtain a random access sequence identifier in each piece of second RACH information and a second TA value of each piece of second RACH information.

The processing unit 802 is further configured to generate a second RAR, where the second RAR includes a target TA value, the resource identifier in the first RAR, and a random access sequence identifier corresponding to the target TA value, the target TA value is one of the second TA values that is closest to the first TA value in the first RAR, and the first RAR is an RAR generated by the centralized processing unit based on the first RACH information.

The sending unit 803 is further configured to send the second RAR.

Optionally, the sending unit 803 is further configured to send the second RAR in a sending slot corresponding to the second RAR, where the sending slot corresponding to the second RAR and a slot in which each user equipment sends the second RACH information are within a same random access period.

Optionally, the receiving unit 801 is further configured to receive a third RAR sent by a second distributed processing unit, where the third RAR is an RAR generated by the second distributed processing unit based on third RACH information received by the second distributed processing unit, a slot in which the second distributed processing unit receives the third RACH information and a slot in which the receiving unit receives the second RACH information are within a same random access period, and the random access apparatus and the second distributed processing unit serve a same cell.

The sending unit 803 is further configured to send the third RAR in a sending slot corresponding to the third RAR, where the sending slot corresponding to the third RAR and the slot in which the second distributed processing unit receives the third RACH information are within a same random access period.

Optionally, the sending unit 803 is further configured to send the second RAR to the second distributed processing unit, so that the second distributed processing unit sends the second RAR, and the random access apparatus and the second distributed processing unit serve a same cell.

Optionally, the sending unit 803 is further configured to send each random access sequence identifier and each second TA value to the centralized processing unit.

FIG. 9 is a schematic structural diagram of another implementation of a random access apparatus according to this application. This implementation may be disposed on user equipment, or may be user equipment. The apparatus is configured to perform the random access method shown in FIG. 6. As shown in FIG. 9, the apparatus may include a sending unit 901, a receiving unit 902, and a processing unit 903.

The sending unit 901 is configured to send RACH information to a first distributed processing unit, where the RACH information includes a random access sequence identifier.

The receiving unit 902 is configured to receive, in a same slot, RARs sent by RRUs in a cell, where the RARs are the same.

The processing unit 903 is configured to obtain a resource identifier based on any RAR.

FIG. 10 is a schematic structural diagram of another implementation of a random access apparatus according to this application. The random access apparatus may be disposed in an RRU, or may be disposed in another device, or may be the RRU.

As shown in FIG. 10, the random access apparatus may include a processor 1001, a memory 1002, and a communications interface 1003.

The processor 1001 is a control center of the random access apparatus and connects to various parts of the entire deployment device by using various interfaces and circuits. By running or executing a software program and/or a module stored in the memory, and invoking data stored in the memory, the processor performs various functions of the random access apparatus and/or data processing. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL for short), or any combination thereof.

The memory 1002 may include a volatile memory (volatile memory), for example, a random access memory (random access memory, RAM). The memory may alternatively include a non-volatile memory (non-volatile memory), for example, a flash memory (flash memory), a hard disk (hard disk drive, HDD), or a solid-state drive (solid-state drive, SSD). The memory may alternatively include a combination of the foregoing types of memories. The memory may store a program or code. A processor in a network element may implement a function of the network element by executing the program or the code.

The communications interface 1003 may be configured to implement communication between the device and another device. For example, when the random access apparatus is an RRU, the communications interface may be a common public radio interface (common public radio interface, CPRI) configured to implement communication between the RRU and a BBU, or a centralized processing unit communicates with a distributed processing unit by using an IPRAN.

Corresponding to the random access method shown in FIG. 2, in an optional implementation, the communications interface 1003 is configured to receive random access channel RACH information sent by at least one user equipment. The communications interface 1003 is further configured to receive random access channel RACH information sent by at least one user equipment. The processor 1001 is configured to obtain first random access information based on each piece of RACH information. The communications interface 1003 is further configured to receive at least one piece of second random access information sent by a second distributed processing unit. The second distributed processing unit and the random access apparatus serve a same cell. The processor 1001 is further configured to generate an RAR based on each piece of random access information. The random access information includes the first random access information and the second random access information, each RAR includes a resource identifier, and each resource identifier is a resource identifier sent by a media access control centralized processing unit. The communications interface 1003 is configured to send each RAR in a preset sending slot.

Optionally, the communications interface 1003 is further configured to send the first random access information to the second distributed processing unit, so that the second distributed processing unit generates the RAR based on each piece of random access information, and sends each RAR in a preset sending slot.

Optionally, the communications interface 1003 may be further configured to send each RAR in the preset synchronous sending slot, and the synchronous sending slot is a slot in which the RARs are synchronously sent by the random access apparatus and the second distributed processing unit.

To implement that random access sequence identifiers in the RARs are different, the communications interface 1003 may be further configured to: when the random access information includes third random access information having a same random access sequence identifier, generate a corresponding RAR based on random access information that is in the third random access information and that has a maximum signal strength value or a minimum timing advance TA.

Corresponding to the random access method shown in FIG. 4, in another optional implementation, the communications interface 1003 is configured to receive the first RACH information sent by first user equipment. The processor 1001 is configured to obtain random access information based on the first RACH information, and the random access information includes a first TA value of the first RACH information. The communications interface 1003 is configured to send the random access information to the centralized processing unit, so that the centralized processing unit generates the first RAR based on the random access information, and sends the first RAR to the distributed processing unit. The communications interface 1003 is further configured to receive the first RAR, and the first RAR includes the first TA value and the resource identifier. The communications interface 1003 is further configured to receive second RACH information sent by at least one user equipment. The processor 1001 is further configured to: obtain a random access sequence identifier in each piece of second RACH information and a second TA value of each piece of second RACH information, and generate a second RAR. The second RAR includes a target TA value, the resource identifier in the first RAR, and a random access sequence identifier corresponding to the target TA value, the target TA value is one of the second TA values that is closest to the first TA value in the first RAR, and the first RAR is an RAR generated by the centralized processing unit based on the first RACH information. The communications interface 1003 is further configured to send a second RAR.

Optionally, the communications interface 1003 is further configured to send the second RAR in a sending slot corresponding to the second RAR, and the sending slot corresponding to the second RAR and a slot in which each user equipment sends the second RACH information are within a same random access period.

Optionally, the communications interface 1003 is further configured to: receive a third RAR sent by a second distributed processing unit, where the third RAR is an RAR generated by the second distributed processing unit based on third RACH information received by the second distributed processing unit, a slot in which the second distributed processing unit receives the third RACH information and a slot in which the receiving unit receives the second RACH information are within a same random access period, and the random access apparatus and the second distributed processing unit serve a same cell; and send the third RAR in a sending slot corresponding to the third RAR, where the sending slot corresponding to the third RAR and the slot in which the second distributed processing unit receives the third RACH information are within a same random access period.

Optionally, the communications interface 1003 is further configured to send the second RAR to the second distributed processing unit, so that the second distributed processing unit sends the second RAR, and the random access apparatus and the second distributed processing unit serve a same cell.

Optionally, the communications interface 1003 is further configured to send each random access sequence identifier and each second TA value to the centralized processing unit.

FIG. 11 is a schematic structural diagram of another implementation of a random access apparatus according to this application. The random access apparatus may be disposed in user equipment, or may be disposed in another device, or may be the user equipment.

As shown in FIG. 11, the random access apparatus may include a processor 1101, a memory 1102, and a communications interface 1103.

The processor 1101 is a control center of the random access apparatus and connects to various parts of the entire deployment device by using various interfaces and circuits. By running or executing a software program and/or a module stored in the memory, and invoking data stored in the memory, the processor performs various functions of the random access apparatus and/or data processing. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL for short), or any combination thereof.

The memory 1102 may include a volatile memory (volatile memory), for example, a random access memory (random access memory, RAM). The memory may alternatively include a non-volatile memory (non-volatile memory), for example, a flash memory (flash memory), a hard disk (hard disk drive, HDD), or a solid-state drive (solid-state drive, SSD). The memory may alternatively include a combination of the foregoing types of memories. The memory may store a program or code. A processor in a network element may implement a function of the network element by executing the program or the code.

The communications interface 1103 may be configured to implement communication between the device and another device. For example, when the random access apparatus is user equipment, the communications interface may be an air interface (air interface) configured to implement communication between the user equipment and an RRU.

The communications interface 1103 is configured to: send RACH information to a first distributed processing unit, where the RACH information includes a random access sequence identifier; and receive, in a same slot, RARs sent by RRUs in a cell, where the RARs are the same. The processor 1101 is configured to obtain a resource identifier based on any RAR.

FIG. 1 is a schematic diagram of a wireless communications system according to this application. The wireless communications system may include the random access apparatus shown in FIG. 7 and the random access apparatus shown in FIG. 9, or may include the random access apparatus shown in FIG. 8 and the random access apparatus shown in FIG. 9, or may include the random access apparatus shown in FIG. 10 and the random access apparatus shown in FIG. 11.

This application further provides a computer-readable storage medium. The computer-readable storage medium may store an instruction. When the instruction is run on a computer, the computer is enabled to perform some or all of the steps in the implementations of the method provided in the present disclosure. The readable storage medium may be a magnetic disk, an optical disc, a read-only memory (read-only memory, ROM), a random access memory (random access memory, RAM), or the like.

This application further provides a computer program product including an instruction. When the computer program product is run on a computer, the computer performs some or all of the steps in the implementations of the method provided in the present disclosure.

This application further provides a chip. The chip includes a processor and/or a program instruction. When the chip is run, the method in the implementation shown in FIG. 2 in this application or the method in the implementation shown in FIG. 4 is implemented.

This application further provides another chip. The chip includes a processor and/or a program instruction. When the chip is run, the method in the implementation shown in FIG. 6 is implemented.

A person skilled in the art may clearly understand that, the technologies in this application may be implemented by using software in addition to a necessary general hardware platform. Based on such an understanding, the technical solutions of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, or a network device) to perform the methods described in the implementations or in some parts of the implementations of the present disclosure.

For same or similar parts in the implementations, reference may be made to each other. For example, for a description of the foregoing apparatus or device, reference may be made to a corresponding method implementation.

The scope of protection shall be defined by the appended claims.

## Claims

1. A method for managing random access in a cell of a multiple remote radio units, multi-RRU, cell network, said cell including a centralized processing unit and multiple distributed processing units, the method comprising:
obtaining (201), by a first distributed processing unit, at least one resource identifier, wherein each resource identifier is a resource identifier pre-allocated by a centralized processing unit;
obtaining (202), by the first distributed processing unit, random access channel RACH information sent by a user equipment;
obtaining (203), by the first distributed processing unit, first random access information based on the RACH information;
receiving (204), by the first distributed processing unit, at least one second random access information sent by a corresponding second distributed processing unit, wherein each second random access information is random access information obtained by the corresponding second distributed processing unit based on the RACH information sent by the user equipment;
generating (205), by the first distributed processing unit, a first random access response RAR based on the first random access information and the at least one second random access information, wherein the RAR comprises a resource identifier, wherein the resource identifier is the resource identifier pre-allocated by the centralized processing unit; and
sending (206), by the first distributed processing unit, the RAR in a preset sending slot;
wherein the first distributed processing unit and each of the at least one second distributed processing units belong to a same logical cell managed by a single centralized processing unit; and
wherein random access sequence identifiers in the first and each second random access information are same.

2. The method according to claim 1, wherein after the obtaining, by the first distributed processing unit, first random access information based on the RACH information, the method further comprises:
sending, by the first distributed processing unit, the first random access information to the at least one second distributed processing unit, so that the at least one second distributed processing unit generates a second RAR based on the first random access information, and sends the second RAR in the preset sending slot, wherein the second RAR is the same as the first RAR.

3. The method according to claim 1 or 2 further comprising selecting all RRUs having a maximum access signal strength value or a minimum timing advance value for a same user as a set of target RRUs for generating a corresponding RAR by using a timing advance value corresponding to each RRU.

4. The method according to any one of claims 1 to 3, wherein the resource identifier sent by the centralized processing unit to the first distributed processing unit is the same as a resource identifier sent by the centralized processing unit to the second distributed processing unit.

5. A first distributed processing unit for use in a multiple remote radio units, multi-RRU, cell network, wherein each cell in said network comprises a centralized processing unit and multiple distributed processing units, the distributed processing unit comprising means for:
obtaining, by the first distributed processing unit, at least one resource identifier, wherein each resource identifier is a resource identifier pre-allocated by a centralized processing unit;
obtaining, by the first distributed processing unit, random access channel RACH information sent by a user equipment;
obtaining, by the first distributed processing unit, first random access information based on the RACH information;
receiving, by the first distributed processing unit, at least one second random access information sent by a corresponding second distributed processing unit, wherein each second random access information is random access information obtained by the corresponding second distributed processing unit based on the RACH information sent by the user equipment;
generating, by the first distributed processing unit, a first random access response RAR based on the first random access information and the at least one second random access information, wherein the RAR comprises a resource identifier, wherein the resource identifier is the resource identifier pre-allocated by the centralized processing unit; and
sending, by the first distributed processing unit, the RAR in a preset sending slot;
wherein the first distributed processing unit and each of the at least one second distributed processing units belong to a same logical cell managed by a single centralized processing unit; and
wherein random access sequence identifiers in the first and each second random access information are same.

6. The first distributed processing unit according to claim 5, wherein the first distributed processing unit further comprises means for:
after the obtaining, by the first distributed processing unit, first random access information based on the RACH information:
sending, by the first distributed processing unit, the first random access information to the at least one second distributed processing unit, so that the at least one second distributed processing unit generates a second RAR based on the first random access information, and sends the second RAR in the preset sending slot, wherein the second RAR is the same as the first RAR.

7. The first distributed processing unit according to claim 5 or 6 further comprising means for:
selecting all RRUs having a maximum access signal strength value or a minimum timing advance value for a same user as a set of target RRUs for generating a corresponding RAR by using a timing advance value corresponding to each RRU.

8. The first distributed processing unit according to any one of claims 5 to 7, wherein the resource identifier sent by the centralized processing unit to the first distributed processing unit is the same as a resource identifier sent by the centralized processing unit to each second distributed processing unit.

## Patentansprüche

1. Verfahren zum Verwalten des Direktzugriffs in einer Zelle eines Zellennetzwerks mit mehreren entfernten Funkeinheiten, Multi-RRU, wobei die Zelle eine zentralisierte Verarbeitungseinheit und mehrere verteilte Verarbeitungseinheiten umfasst, wobei das Verfahren umfasst:
Erhalten (201), durch eine erste verteilte Verarbeitungseinheit, mindestens eines Ressourcen-Identifikators, wobei jeder Ressourcen-Identifikator ein Ressourcen-Identifikator ist, der durch eine zentralisierte Verarbeitungseinheit vorab zugewiesen wurde;
Erhalten (202), durch die erste verteilte Verarbeitungseinheit, von Direktzugriffskanal, RACH-, Informationen, die durch ein Benutzergerät gesendet werden;
Erhalten (203), durch die erste verteilte Verarbeitungseinheit, erster Direktzugriffsinformationen basierend auf den RACH-Informationen;
Empfangen (204), durch die erste verteilte Verarbeitungseinheit, von mindestens zweiten Direktzugriffsinformationen, die durch eine entsprechende zweite verteilte Verarbeitungseinheit gesendet werden, wobei alle zweiten Direktzugriffsinformationen Direktzugriffsinformationen sind, die durch die entsprechende zweite verteilte Verarbeitungseinheit basierend auf den RACH-Informationen erhalten werden, die durch das Benutzergerät gesendet werden;
Erzeugen (205), durch die erste verteilte Verarbeitungseinheit, einer ersten Direktzugriffsantwort RAR basierend auf den ersten Direktzugriffsinformationen und den mindestens einen zweiten Direktzugriffsinformationen, wobei die RAR einen Ressourcen-Identifikator umfasst, wobei der Ressourcen-Identifikator der von der zentralisierten Verarbeitungseinheit vorab zugewiesene Ressourcen-Identifikator ist; und
Senden (206), durch die erste verteilte Verarbeitungseinheit, der RAR in einem voreingestellten Sendeschlitz;
wobei die erste verteilte Verarbeitungseinheit und jede der mindestens einen zweiten verteilten Verarbeitungseinheiten zu derselben logischen Zelle gehören, die durch eine einzige zentralisierte Verarbeitungseinheit verwaltet wird; und
wobei die Identifikatoren der Direktzugriffssequenzen in den ersten und allen zweiten Direktzugriffsinformationen gleich sind.

2. Verfahren nach Anspruch 1, wobei nach dem Erhalten, durch die erste verteilte Verarbeitungseinheit, von ersten, auf den RACH-Informationen basierenden Direktzugriffsinformationen das Verfahren ferner umfasst:
Senden, durch die erste verteilte Verarbeitungseinheit, der ersten Direktzugriffsinformationen an die mindestens eine zweite verteilte Verarbeitungseinheit, so dass die mindestens eine zweite verteilte Verarbeitungseinheit eine zweite RAR basierend auf den ersten Direktzugriffsinformationen erzeugt und die zweite RAR in dem voreingestellten Sendeschlitz sendet, wobei die zweite RAR die gleiche wie die erste RAR ist.

3. Verfahren nach Anspruch 1 oder 2, ferner umfassend das Auswählen aller RRUs mit einem maximalen Zugriffssignalstärkewert oder einem minimalen Zeitvorlaufwert für denselben Benutzer als einen Satz von Ziel-RRUs zum Erzeugen eines entsprechenden RAR unter Verwendung eines jeder RRU entsprechenden Zeitvorlaufwerts.

4. Verfahren nach einem der Ansprüche 1 bis 3, wobei der von der zentralisierten Verarbeitungseinheit an die erste verteilte Verarbeitungseinheit gesendete Ressourcen-Identifikator derselbe ist wie ein von der zentralisierten Verarbeitungseinheit an die zweite verteilte Verarbeitungseinheit gesendeter Ressourcen-Identifikator.

5. Erste verteilte Verarbeitungseinheit zur Verwendung in einem Zellennetzwerk mit mehreren entfernten Funkeinheiten, Multi-RRU, wobei jede Zelle in dem Netzwerk eine zentralisierte Verarbeitungseinheit und mehrere verteilte Verarbeitungseinheiten umfasst, wobei die verteilte Verarbeitungseinheit Mittel umfasst, für:
das Erhalten, durch die erste verteilte Verarbeitungseinheit, von mindestens einem Ressourcen-Identifikator, wobei jeder Ressourcen-Identifikator ein Ressourcen-Identifikator ist, der durch eine zentralisierte Verarbeitungseinheit vorab zugewiesen wurde;
das Erhalten, durch die erste verteilte Verarbeitungseinheit, von Direktzugriffskanal-, RACH-, Informationen, die durch ein Benutzergerät gesendet wurden;
das Erhalten, durch die erste verteilte Verarbeitungseinheit, von ersten Direktzugriffsinformationen, basierend auf den RACH-Informationen;
das Empfangen, durch die erste verteilte Verarbeitungseinheit, von mindestens zweiten Direktzugriffsinformationen, die durch eine entsprechende zweite verteilte Verarbeitungseinheit gesendet werden, wobei alle zweiten Direktzugriffsinformationen Direktzugriffsinformationen sind, die von der entsprechenden zweiten verteilten Verarbeitungseinheit basierend auf den von dem Benutzergerät gesendeten RACH-Informationen erhalten werden;
das Erzeugen, durch die erste verteilte Verarbeitungseinheit, einer ersten Direktzugriffsantwort RAR basierend auf den ersten Direktzugriffsinformationen und den mindestens einen zweiten Direktzugriffsinformationen, wobei die RAR einen Ressourcen-Identifikator umfasst, wobei der Ressourcen-Identifikator der von der zentralisierten Verarbeitungseinheit vorab zugewiesene Ressourcen-Identifikator ist; und
das Senden, durch die erste verteilte Verarbeitungseinheit, der RAR in einem voreingestellten Sendefenster;
wobei die erste verteilte Verarbeitungseinheit und jede der mindestens einen zweiten verteilten Verarbeitungseinheiten zu derselben logischen Zelle gehören, die durch eine einzige zentralisierte Verarbeitungseinheit verwaltet wird; und
wobei die Identifikatoren der Direktzugriffssequenzen in den ersten und allen zweiten Direktzugriffsinformationen gleich sind.

6. Erste verteilte Verarbeitungseinheit nach Anspruch 5, wobei die erste verteilte Verarbeitungseinheit ferner Mittel umfasst für:
nach dem Erhalten, durch die erste verteilte Verarbeitungseinheit, erster Direktzugriffsinformationen, basierend auf den RACH-Informationen:
Senden, durch die erste verteilte Verarbeitungseinheit, der ersten Direktzugriffsinformationen an die mindestens eine zweite verteilte Verarbeitungseinheit, so dass die mindestens eine zweite verteilte Verarbeitungseinheit eine zweite RAR basierend auf den ersten Direktzugriffsinformationen erzeugt und die zweite RAR in dem voreingestellten Sendeschlitz sendet, wobei die zweite RAR die gleiche wie die erste RAR ist.

7. Erste verteilte Verarbeitungseinheit nach Anspruch 5 oder 6, die ferner Mittel umfasst für:
das Auswählen aller RRUs, die einen maximalen Zugriffssignalstärkewert oder einen minimalen Zeitvorlaufwert für einen gleichen Benutzer haben, als einen Satz von Ziel-RRUs zum Erzeugen einer entsprechenden RAR unter Verwendung eines Zeitvorlaufwerts entsprechend jeder RRU.

8. Erste verteilte Verarbeitungseinheit nach einem der Ansprüche 5 bis 7, wobei der von der zentralisierten Verarbeitungseinheit an die erste verteilte Verarbeitungseinheit gesendete Ressourcen-Identifikator derselbe ist wie ein von der zentralisierten Verarbeitungseinheit an jede zweite verteilte Verarbeitungseinheit gesendeter Ressourcen-Identifikator.

## Revendications

1. Procédé de gestion d'un accès aléatoire dans une cellule d'un réseau de cellules à multiples unités radio à distance, multi-RRU, ladite cellule comprenant une unité de traitement centralisée et de multiples unités de traitement distribuées, le procédé comprenant :
l'obtention (201), par une première unité distribuée, d'au moins un identifiant de ressource, dans lequel chaque identifiant de ressource est un identifiant de ressource pré-attribué par une unité de traitement centralisée ;
l'obtention (202), par la première unité de traitement distribuée, d'informations de canal d'accès aléatoire RACH envoyées par un équipement d'utilisateur ;
l'obtention (203), par la première unité de traitement distribuée, de premières informations d'accès aléatoire sur la base des informations RACH ;
la réception (204), par la première unité de traitement distribuée, d'au moins une seconde information d'accès aléatoire envoyée par une deuxième unité de traitement distribuée correspondante, dans lequel chaque seconde information d'accès aléatoire est une information d'accès aléatoire obtenue par la deuxième unité de traitement distribuée correspondante sur la base des informations RACH envoyées par l'équipement d'utilisateur ;
la génération (205), par la première unité de traitement distribuée, d'une première réponse d'accès aléatoire RAR sur la base des premières informations d'accès aléatoire et de l'au moins une seconde information d'accès aléatoire, dans lequel la RAR comprend un identifiant de ressource, dans lequel l'identifiant de ressource est l'identifiant de ressource pré-attribué par l'unité de traitement centralisée ; et
l'envoi (206), par le première unité de traitement distribuée, de la RAR dans un créneau d'envoi prédéfini ;
dans lequel la première unité de traitement distribuée et chacune des au moins une deuxième unité de traitement distribuée appartiennent à une même cellule logique gérée par une seule unité de traitement centralisée ; et
dans lequel les identifiants de séquence d'accès aléatoire dans les premières et chaque seconde information d'accès aléatoire sont identiques.

2. Procédé selon la revendication 1, dans lequel après l'obtention, par la première unité de traitement distribuée, de premières informations d'accès aléatoire sur la base des informations RACH, le procédé comprend en outre :
l'envoi, par la première unité de traitement distribuée, des premières informations d'accès aléatoire à l'au moins une deuxième unité de traitement distribuée, de sorte que l'au moins une deuxième unité de traitement distribuée génère une seconde RAR sur la base des premières informations d'accès aléatoire, et envoie la seconde RAR dans le créneau d'envoi prédéfini, dans lequel la seconde RAR est la même que la première RAR.

3. Procédé selon la revendication 1 ou 2, comprenant en outre la sélection de toutes les RRU ayant une valeur d'intensité de signal d'accès maximale ou une valeur d'avance de synchronisation minimale pour un même utilisateur en tant que groupe de RRU cibles pour générer une RAR correspondante en utilisant une valeur d'avance de synchronisation correspondant à chaque RRU.

4. Procédé selon l'une quelconque des revendications 1 à 3, dans lequel l'identifiant de ressource envoyé par l'unité de traitement centralisée à la première unité de traitement distribuée est le même qu'un identifiant de ressource envoyé par l'unité de traitement centralisée à la deuxième unité de traitement distribuée.

5. Première unité de traitement distribuée destinée à être utilisée dans un réseau de cellules à multiples unités radio à distance, multi-RRU, dans laquelle chaque cellule dans ledit réseau comprend une unité de traitement centralisée et de multiples unités de traitement distribuées, l'unité de traitement distribuée comprenant des moyens pour :
obtenir, par la première unité distribuée, au moins un identifiant de ressource, dans laquelle chaque identifiant de ressource est un identifiant de ressource pré-attribué par une unité de traitement centralisée ;
obtenir, par la première unité de traitement distribuée, des informations de canal d'accès aléatoire RACH envoyées par un équipement d'utilisateur ;
obtenir, par la première unité de traitement distribuée, des premières informations d'accès aléatoire sur la base des informations RACH ;
recevoir, par la première unité de traitement distribuée, au moins une seconde information d'accès aléatoire envoyée par une deuxième unité de traitement distribuée correspondante, dans laquelle chaque seconde information d'accès aléatoire est une information d'accès aléatoire obtenue par la deuxième unité de traitement distribuée correspondante sur la base des informations RACH envoyées par l'équipement d'utilisateur ;
générer, par la première unité de traitement distribuée, une première réponse d'accès aléatoire RAR sur la base des premières informations d'accès aléatoire et de l'au moins une seconde information d'accès aléatoire, dans laquelle la RAR comprend un identifiant de ressource, dans laquelle l'identifiant de ressource est l'identifiant de ressource pré-attribué par l'unité de traitement centralisée ; et
envoyer, par la première unité de traitement distribuée, la RAR dans un créneau d'envoi prédéfini ;
dans laquelle la première unité de traitement distribuée et chacune des au moins une deuxième unité de traitement distribuée appartiennent à une même cellule logique gérée par une seule unité de traitement centralisée ; et
dans laquelle les identifiants de séquence d'accès aléatoire dans les premières et chaque seconde information d'accès aléatoire sont identiques.

6. Première unité de traitement distribuée selon la revendication 5, dans laquelle la première unité de traitement distribuée comprend en outre des moyens pour :
après l'obtention, par la première unité de traitement distribuée, de premières informations d'accès aléatoire sur la base des informations RACH :
envoyer, par la première unité de traitement distribuée, les premières informations d'accès aléatoire à l'au moins une deuxième unité de traitement distribuée, de sorte que l'au moins une deuxième unité de traitement distribuée génère une seconde RAR sur la base des premières informations d'accès aléatoire, et envoie la seconde RAR dans le créneau d'envoi prédéfini, dans laquelle la seconde RAR est la même que la première RAR.

7. Première unité de traitement distribuée selon la revendication 5 ou 6, comprenant en outre des moyens pour :
sélectionner toutes les RRU ayant une valeur d'intensité de signal d'accès maximale ou une valeur d'avance de synchronisation minimale pour un même utilisateur en tant que groupe de RRU cibles pour générer une RAR correspondante au moyen d'une valeur d'avance de synchronisation correspondant à chaque RRU.

8. Première unité de traitement distribuée selon l'une quelconque des revendications 5 à 7, dans laquelle l'identifiant de ressource envoyé par l'unité de traitement centralisée à la première unité de traitement distribuée est le même qu'un identifiant de ressource envoyé par l'unité de traitement centralisée à chaque deuxième unité de traitement distribuée.
